# EUROPEAN PATENT APPLICATION

(11) **EP 2 890 126 A2**
(43) Date of publication of application: **01.07.2015**
(21) Application number: 14200525.5
(22) Date of filing: 30.12.2014
(51) Int. Cl.: H04N 13/02

(54) **Stereo camera**

(30) Priority: 30.12.2013 KR 20130167035
(71) Applicant: Industry-Academic Cooperation Foundation Yonsei University, Seoul 120-749 (KR)
(72) Inventor: Sohn, Kwang-Hoon, 137-836 Seoul (KR); Ryu, Seung Chul, 718-844 Gyeongsangbuk-do (KR); Kim, Seung Ryong, 120-749 Seoul (KR); Kim, Jun Hyung, 120-830 Seoul (KR)
(74) Representative: Nederlandsch Octrooibureau

(57) **Abstract**

A stereo camera is provided. A stereo camera according to an embodiment of the invention includes a first camera, which includes an image sensor of red, green, and blue color channels, and a second camera, which includes an image sensor that has at least some of the channels from at least one of red, green, and blue color channels replaced with infrared (IR) channels.

## Description

### BACKGROUND

### 1. Technical Field

The present invention relates to a stereo camera, more particularly to a stereo camera that includes an infrared filter.

### 2. Description of the Related Art

In general, a stereoscopic picture that expresses a 3-dimensional image is based on the principle of stereo vision perceived by two eyes.

An important factor in providing stereoscopy is the parallax between the two eyes, or binocular parallax, that occurs because a person's eyes are separated from each other by about 65 mm.

Thus, the left and right eyes perceive 2-dimensional pictures that are different from each other, and as these two pictures are transferred by the retina to the brain, the brain combines the images to recreate the sense of depth and realism of the original 3-dimensional image. This is known as stereography.

In recent times, studies are being performed on a stereo vision system that can detect the distance to an object that is positioned in front.

Such a stereo vision system may use two cameras that map a 3-dimensional space into 2-dimensional spaces by a perspective transform, where the 3-dimensional information may be recovered from the geometric arrangement of the cameras.

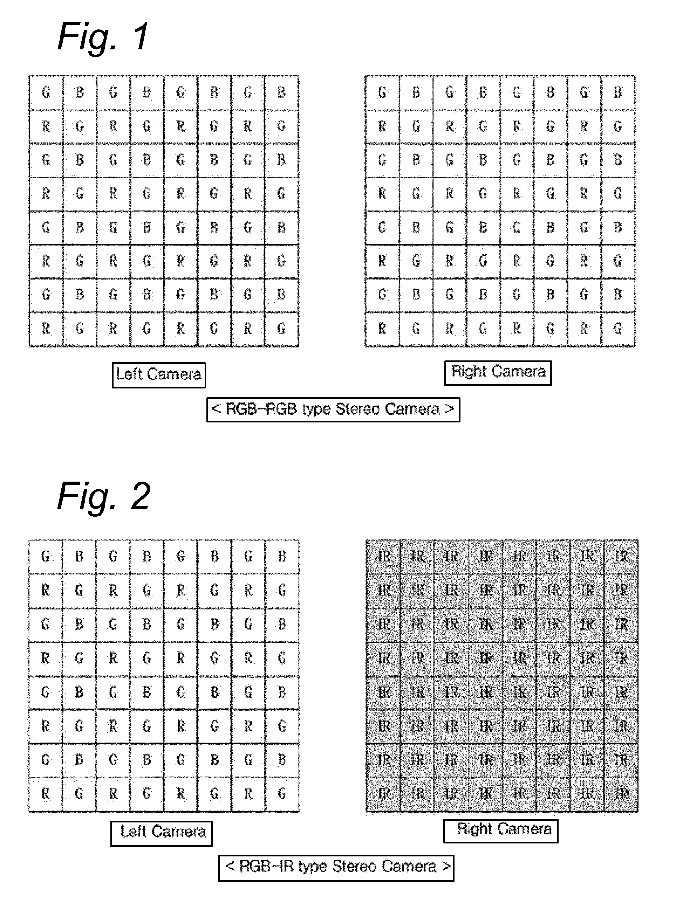

FIG. 1 illustrates the structure of a conventional stereo camera.

The conventional stereo camera may include left and right cameras that include image sensors for the red (R), green (G), and blue (B) colors (hereinafter referred to as 'RGB').

Although the RGB-RGB type stereo camera can provide 3-dimensional information as opposed to an existing single RGB camera, there is a problem of inefficiency, as the only benefit of using one additional camera is simply to obtain 3-dimensional information.

Thus, as an alternative to the RGB-RGB type stereo camera, the RGB-IR (infrared) type stereo camera was recently proposed.

FIG. 2 illustrates the structure of a conventional RGB-IR type stereo camera.

The conventional RGB-IR type stereo camera allows the use of biometric information, panoramic information, etc., that can be acquired from the IR camera, in addition to providing the 3-dimensional information that can be obtained with an existing stereo camera (of the RGB-RGB type), and also allows the acquisition of images of a scene by use of the IR camera in environments of ultra-low illumination (e.g. at night time) that would not be possible to obtain from RGB information.

However, the process for obtaining the 3-dimensional information may be very complicated due to the very different properties of the RGB image and the IR image, and the accuracy of the 3-dimensional information may also be degraded.

### SUMMARY

To resolve the above problems in the related art, an aspect of the invention is to provide a way to readily obtain 3-dimensional information and increase accuracy with an RGB-IR type stereo camera.

To achieve the objective above, an embodiment of the invention provides a stereo camera that includes a first camera, which includes an image sensor of red, green, and blue color channels, and a second camera, which includes an image sensor that has at least some of the channels from at least one of red, green, and blue color channels replaced with infrared (IR) channels.

According to one aspect of the invention, the image sensor of the second camera has all of the red color channels replaced with the infrared channels.

According to another aspect of the invention, the image sensor of the second camera has some of the red color channels replaced with the infrared channels.

According to still another aspect of the invention, the image sensor of the second camera has all of the green color channels replaced with the infrared channels.

According to yet another aspect of the invention, the image sensor of the second camera has some of the green color channels replaced with the infrared channels.

According to still another aspect of the invention, the image sensor of the second camera has all of the blue color channels replaced with the infrared channels.

According to yet another aspect of the invention, the image sensor of the second camera has some of the blue color channels replaced with the infrared channels.

An embodiment of the invention makes it possible to readily acquire 3-dimensional information and increase accuracy with an RGB-IR type stereo camera.

Additional aspects and advantages of the present invention will be set forth in part in the description which follows, and in part will be obvious from the description, or may be learned by practice of the invention.

### BRIEF DESCRIPTION OF THE DRAWINGS

FIG. 1 illustrates the structure of a conventional stereo camera.
FIG. 2 illustrates the structure of a conventional RGB-IR type stereo camera.
FIG. 3 illustrates the structure of a stereo camera according to an embodiment of the invention.
FIG. 4 illustrates the structure of a stereo camera according to another embodiment of the invention.
FIG. 5, FIG. 6, FIG. 7, and FIG. 8 illustrate the structure of a stereo camera according to yet another embodiment of the invention.

### DETAILED DESCRIPTION

The present invention will be described below with reference to the accompanying drawings. However, the present invention can be implemented in several different forms and is not limited to the embodiments described herein.

In order to describe embodiments of the present invention with greater clarity, certain parts have been omitted in the drawings, and like reference numerals have been used for like parts throughout the specification.

In the specification, the description that a part is "connected" to another part refers not only to those cases in which the parts are "connected directly" but also to those cases in which the parts are "connected indirectly" by way of one or more other members interposed therebetween.

Also, the description that a part "includes" a component means that additional components may further be included and does not preclude the existence of other components unless specifically indicated.

Certain embodiments of the present invention will now be described in more detail with reference to the accompanying drawings.

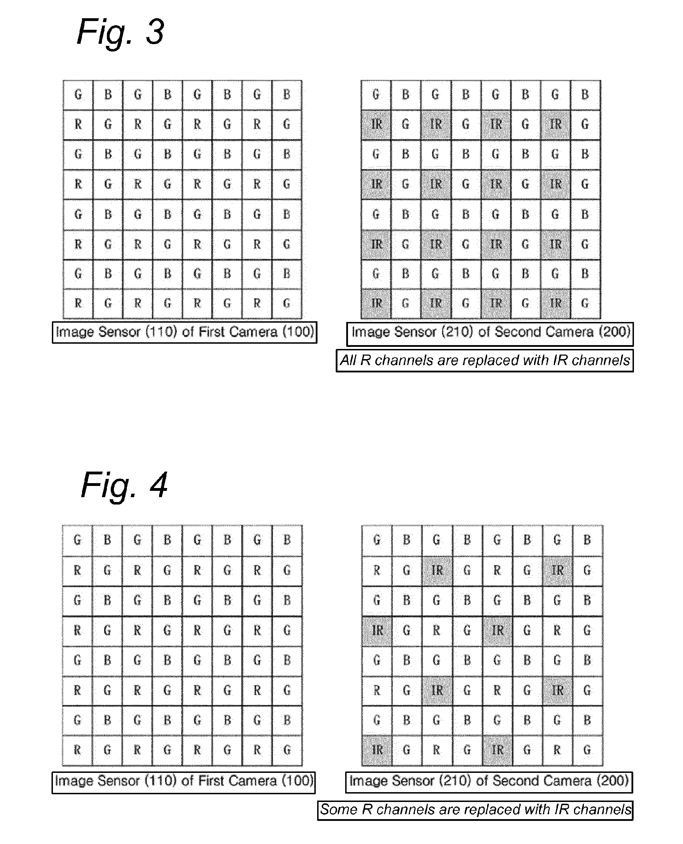

FIG. 3 illustrates the structure of a stereo camera according to an embodiment of the invention.

A stereo camera according to an embodiment of the invention can include a first camera 100 that includes an image sensor 110 having red, green, and blue color channels (hereinafter referred to respectively as 'R channels', 'G channels', and 'B channels', with the three channels referred to collectively as the 'RGB channels') and a second camera 200 that includes an image sensor 210 in which all of the R channels, from among the RGB channels, are replaced by infrared channels (hereinafter referred to as 'IR channels').

Here, the image sensors 110, 210 of the first camera 100 and the second camera 200 can include filters that selectively transmit visible ray components according to their bands and photodiodes that generate charges in response to the rays that penetrate through the filters.

As illustrated in FIG. 3, the first camera 100 can use the image sensor 110 that includes RGB channels, and the second camera 200 can use the image sensor 210 that includes G channels, B channels, and IR channels replacing the R channels, so that the stereo matching can be readily performed due to the G channels and B channels, while the accuracy of the 3-dimensional information can be increased by using the advantages provided by an IR image due to the IR channels.

The number of proportion of the number of each channel included in the respective image sensors 110, 210 of the first camera 100 and second camera 200 can be the same.

For example, if the size of the image sensors 110, 210 is 12×12, the number of R channels, G channels, and B channels in the image sensor 110 of the first camera 100 can be 48, and the number of IR channels, G channels, and B channels in the image sensor 210

FIG. 4 illustrates the structure of a stereo camera according to another embodiment of the invention.

The stereo camera according to another embodiment of the invention can include a first camera 100 that includes an image sensor 110 having RGB channels and a second camera 200 that includes an image sensor 210 in which some of the R channels from among the RGB channels are replaced with IR channels.

As illustrated in FIG. 4, the G channels and B channels and some R channels in the image sensor 210 of the second camera 200 can make it easy to perform stereo matching with the first camera 100, while the IR channels that replace some of the R channels can increase the accuracy of the 3-dimensional information by using the advantages provided by an IR image.

Incidentally, the term "some" used herein to represent a number of R channels replaced by IR channels can be varied in different embodiments.

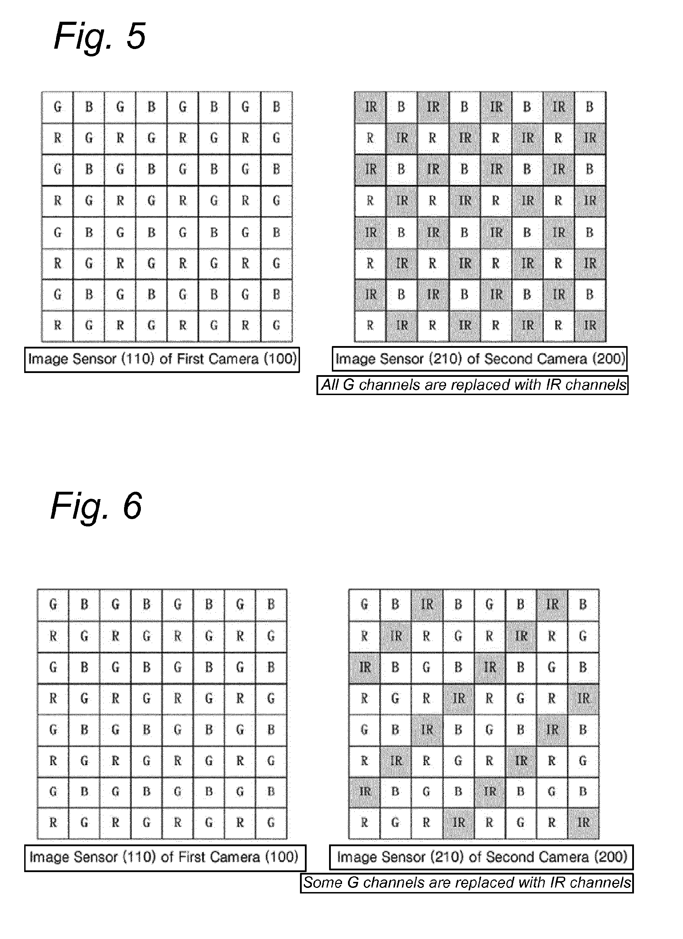

FIG. 5 through FIG. 8 illustrate the structure of a stereo camera according to yet another embodiment of the invention.

FIG. 5 illustrates an embodiment having a first camera 100 that includes an image sensor 110 having RGB channels and a second camera 200 that includes an image sensor 210 in which all of the G channels from among the RGB channels are replaced with IR channels, while FIG. 6 illustrates an embodiment having a second camera 200 that includes an image sensor 210 in which some of the G channels from among the RGB channels are replaced with IR channels.

With the embodiment illustrated in FIG. 5, similar to the descriptions provided for FIG. 3 and FIG. 4, the R channels and B channels and the IR channels that replace all of the G channels in the image sensor 210 of the second camera 200 can make it easy to perform stereo matching with the first camera 100 while the IR channels can increase the accuracy of the 3-dimensional information by using the advantages provided by an IR image.

Also, with the embodiment illustrated in FIG. 6, the R channels and B channels and the IR channels that replace some of the G channels in the image sensor 210 of the second camera 200 can make it easy to perform stereo matching with the first camera 100 while the IR channels can increase the accuracy of the 3-dimensional information by using the advantages provided by an IR image.

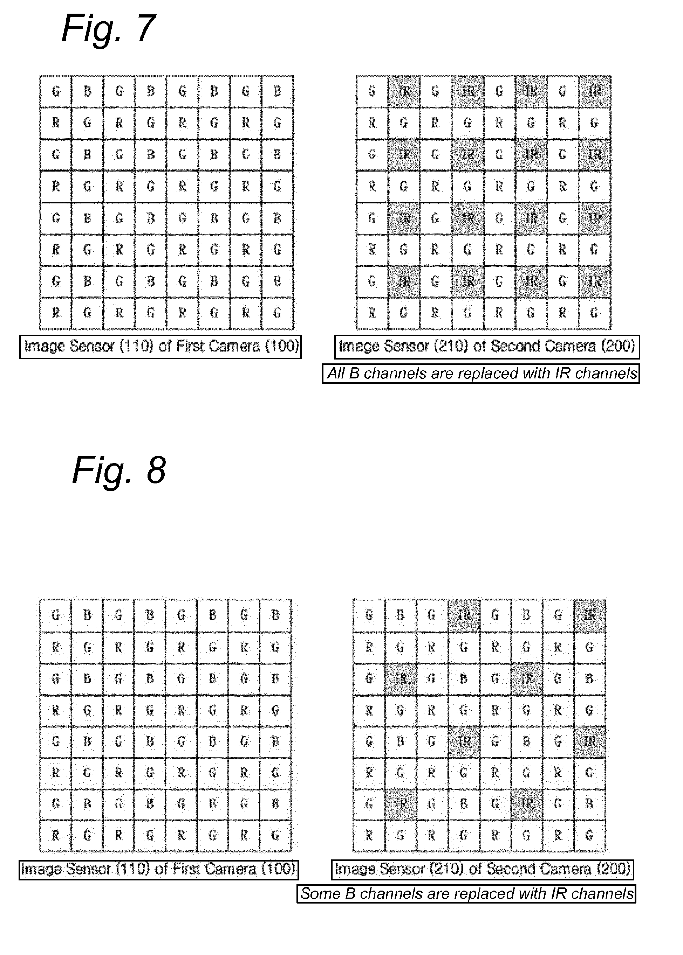

FIG. 7 illustrates an embodiment having a first camera 100 that includes an image sensor 110 having RGB channels and a second camera 200 that includes an image sensor 210 in which all of the B channels from among the RGB channels are replaced with IR channels, while FIG. 8 illustrates an embodiment having a second camera 200 that includes an image sensor 210 in which some of the B channels from among the RGB channels are replaced with IR channels.

With the embodiments illustrated in FIG. 7 and FIG. 8, similar to the descriptions provided for FIG. 3 and FIG. 4, the R channels and G channels and the IR channels that replace all of the B channels, or the R channels and G channels and some B channels and the IR channels that replace some of the B channels, in the image sensor 210 of the second camera 200 can make it easy to perform stereo matching with the first camera 100 while the IR channels can increase the accuracy of the 3-dimensional information by using the advantages provided by an IR image.

The embodiments of the present invention set forth above are for illustrative purposes. It would be appreciated by those of ordinary skill in the field of art to which the present invention pertains that the embodiments above can be easily modified to other specific implementations without departing from the technical spirit of the present invention and without changing the essential features of the present invention.

Thus, the embodiments described above are merely given as examples and do not limit the present invention.

For example, a component described as an integrated form can be used in a distributed form, while components described as being in a distributed form can be used coupled together.

The scope of the present invention is to be defined by the scope of claims set forth below, and it is to be appreciated that all variations and modifications which can be derived from the meaning and scope of the claims as well as their equivalents are encompassed by the scope of the present invention.

## Claims

1. A stereo camera comprising:
a first camera including an image sensor of red, green, and blue color channels; and
a second camera including an image sensor in which at least some of the channels from at least one of red, green, and blue color channels are replaced with infrared (IR) channels.

2. The stereo camera of claim 1, wherein the image sensor of the second camera has all of the red color channels replaced with the infrared channels.

3. The stereo camera of claim 1, wherein the image sensor of the second camera has some of the red color channels replaced with the infrared channels.

4. The stereo camera of claim 1, wherein the image sensor of the second camera has all of the green color channels replaced with the infrared channels.

5. The stereo camera of claim 1, wherein the image sensor of the second camera has some of the green color channels replaced with the infrared channels.

6. The stereo camera of claim 1, wherein the image sensor of the second camera has all of the blue color channels replaced with the infrared channels.

7. The stereo camera of claim 1, wherein the image sensor of the second camera has some of the blue color channels replaced with the infrared channels.
